# FASCICULE DE BREVET EUROPEEN

(11) **EP 3 844 529 B1**
(45) Date de publication et mention de la délivrance du brevet: **22.03.2023**
(21) Numéro de dépôt: 19758777.7
(22) Date de dépôt: 29.08.2019
(51) Int. Cl.: G01S 13/74, G01S 13/78

(54) **PROCEDE DE CARACTERISATION DE LA DENSITE D'INTERROGATIONS ET DE REPONSES MODE S ET RADAR SECONDAIRE METTANT EN ?UVRE UN TEL PROCEDE**
VERFAHREN ZUR CHARAKTERISIERUNG DER DICHTE VON MODUS-S-ABFRAGEN UND -ANTWORTEN SOWIE SEKUNDÄRRADAR ZUR DURCHFÜHRUNG EINES SOLCHEN VERFAHRENS
METHOD FOR CHARACTERIZING THE DENSITY OF MODE S INTERROGATIONS AND REPONSES AND SECONDARY RADAR IMPLEMENTING SUCH A METHOD

(30) Priorité: 30.08.2018 FR 1800914
(43) Date de publication de la demande: 07.07.2021
(73) Titulaire: THALES, 92400 Courbevoie (FR)
(72) Inventeur: BILLAUD, Philippe, 91470 LIMOURS (FR)
(74) Mandataire: Atout PI Laplace
(86) Numéro de dépôt international: PCT/EP2019/073091
(87) Numéro de publication internationale: WO 2020/043825

(56) Documents cités:
- EP-A1- 0 184 956
- US-A- 5 825 322
- US-A1- 2007 252 750

## Description

La présente invention concerne un procédé de caractérisation de la densité d'interrogations Mode S dans l'environnement d'un ou plusieurs radars secondaires. Elle concerne également un radar apte à mettre en oeuvre un tel procédé.

Le domaine de l'invention est le contrôle du trafic aérien (ATC) dans les domaines civil et militaire pour lequel les performances des radars secondaires sont importantes, plus particulièrement au niveau de la détection des avions.

Les performances d'un radar Mode S sont directement liées à la disponibilité des transpondeurs avec lesquels il dialogue. En effet un radar secondaire, contrairement à un radar primaire, se distingue par le fait qu'il établit un dialogue basé sur :
- une interrogation sélective destinée à une cible précise via son adresse Mode S à 1030 MHz ;
- une réponse des transpondeurs des avions encodée avec son adresse Mode S à 1090 MHz.

Le transpondeur d'un avion dialogue avec tous les radars l'environnant. Sa capacité de dialogue est physiquement limitée mais doit respecter les minimums définis par l'organisation de l'aviation civile internationale (OACI ou ICAO en anglais).

Ainsi, au-delà des limites du nombre de réponses possibles (finalement assez basse : 16 réponses longues par seconde), un transpondeur peut ne pas répondre aux interrogations sélectives des radars. Or, la probabilité de détection garantie d'un radar secondaire est classiquement établie sur la base d'une disponibilité de 90% d'un transpondeur. Hors le lobe d'interrogation d'un radar a une durée de l'ordre de 25 à 50 ms soit de la classe du trentième de la base de temps de la spécification du transpondeur. Il en résulte que si le transpondeur vient d'atteindre sa saturation, par exemple en réponse longue, il ne répondrait donc pas pendant la durée courte du lobe radar juste consécutive à sa saturation et donc la cible ne serait pas vue par le radar.

De plus en cas de sur-interrogations d'une zone, même si les interrogations ne concernent pas un transpondeur, donc ne consomme pas son taux de réponse, celui-ci en perd néanmoins de son taux de disponibilité puisqu'il se bloque pendant une durée spécifiée suite au traitement d'une interrogation qu'elle soit suivie ou non de la génération d'une réponse. Ceci réduit la portée effective du radar car pour une cible lointaine le nombre d'interrogations du radar sur une telle cible sont naturellement plus limitées en nombre dans un faisceau radar pour des raisons de bilan radioélectrique.

Selon l'art antérieur, les seuls moyens pour connaître le taux d'interrogation des avions consistent à réaliser des vols de calibration avec un avion spécialisé pour mesurer le taux d'interrogation qu'il reçoit lors de son vol dans les zones géographiques à analyser. Cette solution est coûteuse et surtout n'évalue la situation qu'à un instant donné et uniquement que pour chaque position de la trajectoire de cette avion au moment où il s'y situe.

De plus, en considérant que les faisceaux radars ont des périodes de rotation de l'ordre de 5 secondes en moyenne la mesure effectuée par un vol dédié à cette mesure ne peut être faite que pour un seul état de déphasage entre les rotations des faisceaux radars. Cela ne couvre donc pas toutes les combinaisons temporelles possibles d'interrogation par zone de l'espace dues à l'ensemble des interrogateurs.

Les documents US 2007/252750 A1 et EP 0 184 956 A1 divulguent des procédés de défruitage des réponses de transpondeurs reçues par un radar secondaire. Le document US 5 825 322 A divulgue un procédé de commande de la vitesse de balayage d'un radar.

Un but de l'invention est de pallier les inconvénients précités. A cet effet, l'invention a pour objet un procédé de caractérisation de la densité d'interrogations et de réponses Mode S dans l'environnement d'au moins un radar secondaire en opération, ledit environnement étant défini par le domaine de l'espace aérien couvert par ledit radar, ledit environnement étant parcouru par des cibles Mode S, une cible Mode S étant une cible émettant une réponse aux interrogations Mode S émises par un radar secondaire, ledit procédé comportant au moins :
- une première étape dans laquelle ledit radar effectue :
   ∘ la détection et la localisation de cibles Mode S au moyen de leurs réponses synchrones aux interrogations émises par ledit radar ou leurs positions transmises dans des squitters ADS-B long ;
   ∘ la détection des réponses asynchrones émises par les mêmes cibles Mode S, donc non sollicitées par ledit radar ;
   ∘ pour chaque cible localisée, l'association de ses réponses asynchrones avec les réponses synchrones audit radar ou les positions données par lesdits squitters ADS-B ;
- une deuxième étape dans laquelle ledit radar effectue :
   ∘ à partir de ladite association, la détermination du taux de réponses de chaque cible en comptant le nombre de réponses synchrones et asynchrones reçues de ladite cible pour différentes périodes de temps donnée ;
   ∘ ledit environnement étant découpé en cellules d'espace élémentaires, la détermination du taux de réponses par cellules en comptant le nombre de réponses synchrones et asynchrones reçues par chaque cible localisée dans chaque cellule, ledit taux caractérisant la densité d'interrogations et de réponses Mode S par cellule ou par groupe de cellules

Dans un mode de mise en oeuvre particulier, la détection des réponses asynchrones par ledit radar est effectuée par un traitement permanent de détection et de décodage des réponses asynchrones reçues sur chaque diagramme d'antenne, ledit traitement exploitant séparément chacun desdits diagrammes. Lesdits diagrammes sont par exemple le diagramme somme, le diagramme différence, le diagramme de contrôle avant et le diagramme de contrôle arrière.

Lesdites réponses asynchrones non sollicitées par ledit radar sont par exemple :
- des réponses sollicitées par un autre radar secondaires pouvant être tous types d'interrogateurs ;
- et/ou des réponses automatiquement générées par lesdites cibles, comprenant des réponses de type squitter ADS-B ou TCAS.

Dans ladite deuxième étape, ledit radar effectue par exemple la caractérisation des sources de réponses asynchrones, lesdites sources étant des radars secondaires, pouvant être tous types d'interrogateurs, la caractérisation d'une source étant réalisée par au moins une caractéristique parmi les caractéristiques suivantes :
- l'identification de ladite source ;
- la période de rotation de l'antenne de ladite source ;
- la localisation de ladite source ;
- le taux d'interrogations « All Call » de ladite source ;
- la largeur du lobe d'interrogation de ladite source ;
- la puissance rayonnée par ladite source.

Un signal d'alerte est par exemple généré quand le taux de réponses reçues d'une cible dépasse un seuil donné.

Un signal d'alerte est par exemple généré quand le taux de réponse d'au moins une cellule dépasse un seuil donné.

Dans un mode de réalisation particulier, le blocage d'une cible étant l'incapacité de ladite cible à émettre une réponse à une interrogation Mode S, dans ladite deuxième étape ledit radar effectue la caractérisation du taux de blocage d'une cible en analysant les réponses asynchrones de ladite cible :
- soit en caractérisant la non réponse du transpondeur de cette cible :
   ∘ par son occupation à générer une réponse à l'aide d'un fruit synchrone de l'interrogation n'ayant pas eu de réponse au niveau du transpondeur ;
   ∘ ou par un taux de réponse au-delà des limites OACI dans la période antérieure à la non réponse à une interrogation ;
- soit en supposant une autre hypothèse correspondant à :
   ∘ un chevauchement d'interrogations émises par plusieurs senseurs non interprétées par le transpondeur de cette cible ;
   ∘ un transpondeur de cette cible ayant atteint son maximum de taux de réponse bien qu'inférieur au minimum de l'OACI.

Ladite première étape et ladite deuxième étape étant exécutées en contexte multiradars soit par au moins deux radars secondaires, lesdits taux de réponses obtenus par chacun desdits au moins deux radars sont par exemple calculés en considérant l'ensemble des réponses synchrones et asynchrones des deux radars pour obtenir des taux de réponses globaux plus précis, la densité d'interrogation étant caractérisée au moyen de ces taux globaux.

Lesdits taux de blocages obtenus par chacun desdits au moins deux radars sont par exemple calculés en considérant l'ensemble des réponses synchrones et asynchrones des deux radars pour obtenir un taux de blocage global plus précis.

Les informations obtenues de chacun desdits au moins deux radars sont par exemple transmises à un centre de contrôle aérien et exploitées par ledit centre.

Lesdites informations sont par exemple exploitées pour permettre une régulation de l'ensemble des radars secondaires afin de supprimer les zones de sur interrogations, de blocage des transpondeurs ainsi que les transpondeurs défaillants afin d'accroitre la sécurité de la surveillance ATC.

L'invention a également pour objet un radar mettant en oeuvre un procédé tel que précédemment décrit.

D'autres caractéristiques et avantages de l'invention apparaîtront à l'aide de la description qui suit faite en regard de dessins annexés qui représentent :
- la figure 1, un exemple de synoptique d'un radar secondaire Mode S ;
- la figure 2, un exemple de mise en oeuvre matérielle de l'invention sur le synoptique du radar de la figure 1 ;
- la figure 3, une illustration des étapes possibles pour la mise en oeuvre de l'invention ;
- la figure 4, une illustration de la portée d'un radar secondaire ;
- la figure 5, une illustration du chevauchement des portées de deux radars secondaires ;
- la figure 6, un zoom du chevauchement de la figure 5 avec les différentes zones de chevauchement ;
- la figure 7, une illustration de la zone azimutale d'influence d'un radar R2 sur un radar R1 en référence à l'exemple des figures 5 et 6 ;
- la figure 8, une illustration de la génération de fruits quasi-simultanés dans le faisceau dudit radar R2 ;
- la figure 9, une illustration de l'évolution du faisceau dudit radar R2 lors de sa rotation ;
- la figure 10, une illustration des taux de réponses par cellule élémentaire des zones de couverture des radars concernés.

Les objectifs principaux dans l'obtention à terme de la connaissance permanente du taux d'interrogation et réponse par zone de l'espace sont notamment :
- au niveau du responsable d'un radar, de pouvoir détecter des conflits existants (densité de fruits, de non réponse à des interrogations, utilisation de même code II/SI) pour lesquels une réaction rapide est requise
- au niveau du système ATC, en responsabilité de plusieurs radars partageant la même zone géographique, de pouvoir :
   ∘ régler le fonctionnement global en adaptant les paramètres des radars de la zone en prenant en considération désormais leurs interactions mesurées et ainsi éviter des zones géographiques de blocage des transpondeurs car sur-interrogés ;
   ∘ suivre l'évolution sur de longue période (jour, mois, années) afin d'en voir les évolutions en fonction des flux aériens et de s'assurer de la pertinence du paramétrage ;
   ∘ détecter et localiser des sources non référencées externes d'interrogation.

On rappelle que les réponses non sollicitées pourront être nommées par la suite « fruit » selon l'expression anglo-saxonne « False Reply Unsynchronized In Time ». Ces réponses sont ainsi nommées car :
- elles ne sont pas attendues par le radar qui les rejette (« False ») ;
- elles sont des réponses très similaires à celles synchrones et issues des mêmes cibles dans la même couverture du radar, ayant même fréquence et même format de message (« Reply ») ;
- elles ne sont pas associées à une interrogation de ce radar (« Unsynchronized in Time »). :
   ∘ mais d'un autre radar opérationnel
   ∘ voire d'interrogateurs intrus de type involontaire ou malveillant ou même émise par la cible de façon périodique tels que les squitters ADS-B_out ou TCAS en cas de résolution de conflit entre avions. Dans le texte du brevet on emploie le terme ADS-B pour représenter les fruits issus spontanément des avions. Les squitters ADS-B_out long (« Automatic Dependent Surveillance - Broadcast ») sont des informations de position fournies par les avions qui ne sont pas déclenchées en réponse à des signaux d'interrogation radar mais sont émises automatiquement depuis des moyens d'émissions des avions.

Comme cela sera décrit plus en détail par la suite, la solution selon l'invention consiste à analyser les fruits que génèrent les cibles qu'un radar gère avec les autres radars environnants ainsi que les squitters ADS-B_out qu'ils émettent. Un radar secondaire enrichit alors le plot qu'il transmet d'un avion donné des caractéristiques des fruits qu'il a réussi à détecter pour cette cible, ces caractéristiques étant par exemple les suivantes :
- nombre de fruits par longueur et type (fruit/squitter), notamment pour évaluer la situation de la cible vis-à-vis des limites imposées par l'OACI exposées précédemment ;
- pour chaque fruit (liste non limitative):
   ∘ longueur du fruit ;
   ∘ type de fruit ;
   ∘ position de l'avion lors de la réception du fruit par le radar ;
   ∘ code II/SI du radar interrogeant ou squitter ;
notamment pour évaluer le taux d'interrogations par zone géographique.

Cet enrichissement se fait à la suite de chaque détection du même avion.

Ensuite soit localement au niveau du radar, soit au niveau d'un centre de maintenance système recevant ces informations/caractéristiques, on cumule ces informations élémentaires pour cette cible, pour définir la moyenne et les crêtes de taux de réponses au cours de son vol et ainsi évaluer la situation de la cible vis-à-vis des limites imposées par l'OACI.

On cumule également ces informations avec l'ensemble des informations du même type issues des cibles gérées par le radar pour établir par zone géographique le taux de réponses à 1090 MHz permettant de cibler des zones géographiques de forte interrogation.

On établit ainsi une carte géographique (cartographie) en 2D ou 3D du taux d'interrogation Mode S selon différentes durées de mesure, quelle qu'en soit la source, dans la couverture d'un radar secondaire.

De plus, en exploitant la distribution géographique des fruits des avions non verrouillés donnant l'identification du radar interrogeant, on peut identifier certains des radars potentiellement participants à un taux de réponse à 1090 MHz. Ce qui est très utile surtout s'il est trop élevé et qu'il induit des non détections auprès d'autres radars demandant une réaction corrective assez rapide.

La fonction de détection, localisation et caractérisation des interrogateurs Mode S environnants (Radar, WAM, ...) peut être considérée :
- aussi bien comme une fonction en tant que telle par exemple dans un emploi Militaire d'un radar projeté sur un théâtre d'opération,
- mais aussi, par exemple dans un emploi Civil, comme un attribut du taux de fruits par zone géographique permettant une optimisation de la Surveillance ATC multi radars (en sachant sur quel radar agir pour réduire le taux d'interrogation local de transpondeur).

On précise que sous le terme de radar environnant pourra être utilisé par la suite à titre générique pour couvrir tous types d'interrogateurs.

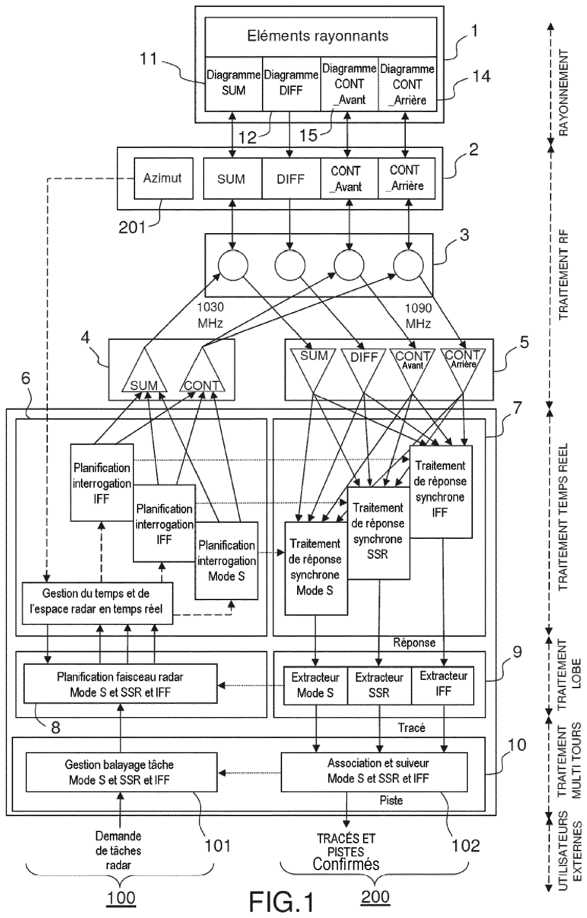

En regard de la figure 1 qui présente un exemple de synoptique d'un radar secondaire Mode S, on rappelle les principes d'un tel radar. Ce principe (les échanges Mode S entre interrogateur et transpondeur étant définis en détail par l'OACI Annexe 10 vol.4) consiste à :
- émettre des interrogations sélectives :
   - soit indiquant le destinataire : une seule cible désignée par son adresse Mode S (champ de 24bits) ;
   - soit indiquant l'identifiant de l'émetteur (Identifier Code_IC) ;
- recevoir des réponses sélectives :
   - indiquant l'identifiant de l'émetteur : la même adresse Mode S de la cible ;
   - dont le contenu principal dépend du message :
      o DF4 : définissant l'altitude ;
      o DF5 : définissant l'identité (code A) ;
      o DF20 : définissant l'altitude plus le registre BDS dont le numéro est connu notamment par l'interrogation qui l'a requis ;
      o DF21 : définissant l'identité (code A) plus le registre BDS dont le numéro est connu en autre par l'interrogation qui l'a requis

Dans la suite de la description nous considérerons principalement le radar sous l'aspect du protocole Mode S qu'il ait ou non les capacités de traiter aussi les protocoles SSR et IFF non intervenants dans le procédé selon l'invention mais néanmoins présents dans la configuration la plus compète d'un radar de surveillance secondaire.

Dans son emploi usuel, le radar secondaire fonctionne en mode synchrone, c'est-à-dire qu'il émet une interrogation et attend une réponse en cohérence avec celle-ci, ce qui lui permet de localiser par mesure (en azimut et distance) et d'identifier (par l'adresse Mode S) la cible.

Pour effectuer cette tâche avec performance, le radar est équipé d'une antenne 1 ayant plusieurs diagrammes 11, 12, 14, 15 dont les rôles sont classiquement :
- un diagramme somme 11, noté par la suite SUM, pour interroger et détecter la réponse synchrone de la cible ;
- un diagramme différence 12, noté DIFF, pour localiser finement la cible dans le faisceau SUM ;
- un premier diagramme de contrôle avant 15, noté CONT_front, pour bloquer et réjecter les réponses issues de cibles face à l'antenne non présentes dans le faisceau principal de SUM mais interrogées par un lobe secondaire de SUM ;
- un deuxième diagramme de contrôle arrière 14, noté CONT_back, pour bloquer et réjecter les réponses issues de cibles au dos à l'antenne (donc forcément non présentes dans le faisceau de SUM mais interrogées par des fuites de lobe frontal de SUM).

Selon les missions et donc les performances attendues du radar les antennes peuvent être :
- de plusieurs diagrammes :
   - 4 diagrammes : SUM, DIFF, CONT_Front & CONT_Back ;
   - 3 diagrammes : SUM, DIFF, CONT (CONT_Front et CONT_Back sont regroupés au niveau de l'antenne) ;
   - 2 diagrammes : SUM, DIFF/CONT (DIFF, CONT_Front & CONT_Back sont regroupés au niveau de l'antenne).
- de dimensions différentes :
   - en largeur :
      ∘ ayant une grande largeur pour avoir un faisceau principal fin apportant un fort gain ainsi que pour être sélective et précise en azimut ;
      ∘ ayant une moyenne ou petite largeur pour un besoin mobilité du radar (principalement en IFF).
   - en hauteur :
      ∘ ayant une grande hauteur, de type Large Vertical Aperture (LVA) apportant du gain et une protection contre les réflexions sol (principalement en ATC civil) ;
      ∘ ayant une petite hauteur, de type « poutre » apportant une mobilité (principalement en IFF).

Alors que les diagrammes SUM et DIFF sont classiquement fins avec des lobes à 3 dB entre 2,4° à 10°, les diagrammes CONT_Front et CONT_Back cherchent à couvrir pratiquement 180° respectivement chacun.

Les antennes peuvent aussi être :
- de diagramme fixe, dites « mécaniques » et tournantes ;
- de diagramme évolutif, à balayage électronique, dites « AESA » fixes ou tournantes.

Dans le texte à suivre, on décrit la configuration antennaire la plus complète, soit 4 diagrammes en antenne rotative, sachant que les autres configurations se traitent de façon similaire quel que soit le nombre de diagrammes d'antennes exploités que l'antenne soit tournante ou fixe. Pour simplifier la description, on pourra cependant, à titre d'exemple dans la suite de la description, utiliser la configuration à 3 diagrammes en utilisant CONT à la place de CONT_Front et CONT_Back.

Le principe fondamental du récepteur de squitter ADS-B utilisant le même protocole Mode S (messages définis en détail par l'OACI Annexe 10 vol.4) consiste à :
- recevoir des réponses sélectives non sollicitées donc asynchrones :
   - indiquant l'identifiant de l'émetteur : la même adresse Mode S (champ de 24bits) de la cible que celle transmise au radar ;
   - la nature du contenu du message (DF=17) dont la nature est variable selon le champ TC du message :
      o 1 à 4 "Aircraft identification"
      o 5 à 8 "Surface position"
      o 9 à 18 "Airborne position (Baro Alt)"
      o 19 "Airborne velocities "
      o 20 à 22 "Airborne position (GNSS Height)"
      o 23 "Test message"
      o 24 "Surface system status"
      o 25 à 27 "Reserved"
      o 28 "Extended squitter AC status"
      o 29 "Target state and status (V.2)"
      o 30 "Reserved "
      o 31 "Aircraft Operation status".

La liste ci-dessus est donnée à titre d'exemple, elle est indicative et évolutive.

Dans son emploi usuel, un récepteur ADS-B_in fonctionne donc en mode asynchrone, c'est-à-dire qu'il écoute sur 360° un message Mode S très similaire à celui du radar pour la localisation (azimut et distance) et l'identification (adresse Mode S) d'une cible.

Pour effectuer cette tâche avec performance, le récepteur ADS-B_in est équipé :
- soit d'une antenne omnidirectionnelle couvrant 360°, ce qui est une configuration courante ;
- soit de plusieurs antennes de large diagramme couvrant 360° au total :
   - deux antennes de couverture supérieure 180° dos à dos, qui est configuration la plus répandue ;
   - plus rarement de trois antennes de couverture supérieure à 120° ou encore quatre antennes de couverture supérieure à 90° ;
   dont le rôle est uniquement, par un diagramme unique (de type somme), de détecter la réponse asynchrone de la cible et d'en décoder le contenu, selon les formats rappelés ci-dessus.

Etant donné que le radar secondaire et le récepteur ADS-B exploitent des messages quasi identiques (même fréquence 1090MHz, même forme d'onde, même structure de données du message de la réponse) il est aisé d'intégrer au radar la fonction d'écoute des squitters ADS-B asynchrones en écoutant ceux-ci par les différents diagrammes de l'antenne du radar et cela principalement, mais pas uniquement, par le diagramme omnidirectionnel :
- soit par une fonction réception associée à un diagramme d'antenne omnidirectionnel : CONT ;
- soit par deux récepteurs chacun associés à un des deux diagrammes d'antenne semi-omnidirectionnels : CONT_front & CONT_Back.

Avant de décrire plus en détail l'invention, on décrit les éléments constitutifs du radar Mode S de la figure 1. Le synoptique fait apparaître le fonctionnement synchrone du radar Mode S :
- sur la partie gauche 100 par la génération des interrogations ;
- sur la partie droite 200 par le traitement synchrone des réponses associées,
ainsi que les synchronisations entre celles-ci par les flèches transverses entre gauche et droite.

Les fonctions des principaux éléments sont rappelées ci-après :
L'antenne 1 assure le rayonnement des interrogations à 1030 MHz et des réponses en retour à 1090 MHz, selon les quatre diagrammes : SUM, DIFF, CONT_Front et CONT_Back, ou trois diagrammes (SUM, DIFF, CONT). ou selon deux diagrammes (SUM, DIFF/CONT).

Un joint tournant 2 et des câbles de descente d'antenne, pour une antenne rotative, assurent :
- le couplage RF des signaux transmis à 1030 MHz et reçus à 1090 MHz indépendamment pour les quatre diagrammes entre la partie tournante et la partie fixe du radar ;
- la diffusion de la position en azimut 201 de l'axe du lobe principal de l'antenne.

Un traitement RF comporte :
- un duplexeur ou circulateur 3 assurant le couplage RF entre les signaux transmis à 1030 MHz et reçus à 1090 MHz indépendamment pour les quatre diagrammes ;
- un émetteur 4 assurant :
   - la transmission des interrogations à 1030 MHz sur le diagramme SUM ;
   - le blocage des transpondeurs en dehors du lobe SUM à 1030 MHz par les diagrammes CONT_Front et CONT_Back ;
   - ceci pour les différents protocoles secondaires : IFF, SSR et Mode S ;
- un récepteur 5 assurant la réception des réponses à 1090 MHz sur les quatre diagrammes SUM, DIFF, CONT_Front et CONT_Back, pour les différents protocoles secondaires : IFF, SSR et Mode S.

Un traitement temps réel comporte :
- une gestion spatio-temporelle 6 assurant la gestion temps réel des périodes d'interrogations et d'écoutes associées pour les différents protocoles secondaires : IFF, SSR et Mode S ;
- un traitement du signal 7 assurant :
   - le traitement des réponses dans les périodes d'écoutes associées aux interrogations pour les différents protocoles secondaires : IFF, SSR et Mode S ;
   - la détection et le décodage des réponses Synchrones dans le lobe principal de l'antenne en exploitant les quatre diagrammes :
      ∘ SUM : pour détecter les réponses reçues dans le lobe principal ;
      ∘ DIFF : pour localiser finement en azimut les réponses reçues dans le lobe principal SUM et éventuellement pour la détection ;
      ∘ CONT_Front et CONT_Back : pour réjecter les réponses reçues sur les lobes secondaires de SUM et DIFF dans le cas d'une détection dans le lobe principal de DIFF.

Un traitement dans le lobe principal de l'antenne comporte :
- une gestion 8 des cibles présentes dans le lobe, assurant :
   ∘ la préparation des transactions (interrogations et réponses) à effectuer dans le prochain lobe pour les différents protocoles secondaires IFF, SSR et Mode S ;
   ∘ le placement des interrogations et réponses Mode S dans la future période « Roll call » en fonction de l'état des transactions venant d'être effectuées.
- des extracteurs 9 assurant la constitution de plots pour chacun des différents protocoles secondaires IFF, SSR et Mode S, à partir des réponses synchrones reçues dans le lobe selon le protocole employé lors des interrogations.

Un traitement multi tours 10 comporte :
- une gestion 1001 des tâches Mode S à effectuer avec les cibles dans la couverture, assurant la prédiction de positions des cibles (rendez-vous d'antenne) et la préparation des tâches à effectuer avec ces positions selon les demandes internes, externes et l'état des transactions des tours précédents ;
- une association des plots et un pistage 1002 des cibles dans la couverture assurant le pistage des cibles pour améliorer les performances (élimination des faux plots, contrôle de données décodées notamment) et pour prédire la position future de celles-ci.

Une interface avec les utilisateurs permet la prise en compte par le radar de différentes requêtes et de visualiser les plots et les poursuites de cibles.

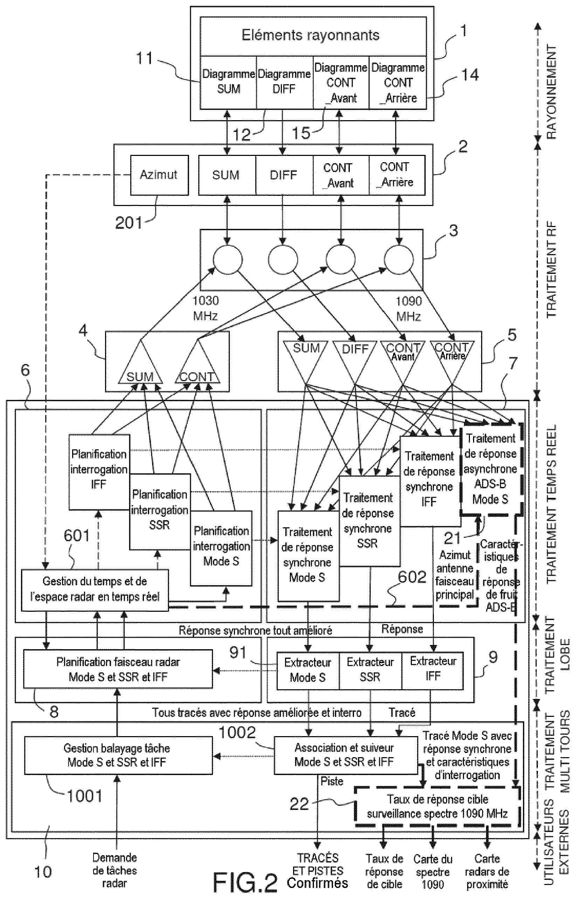

La figure 2 illustre la mise en oeuvre matérielle de l'invention en présentant le synoptique du radar de la figure 1 augmentée des éléments propres à l'invention. Ces éléments sont représentés en traits discontinus.

Alors que le fonctionnement du radar Mode S est synchrone, la figure 2 montre que les traitements ajoutés pour l'invention ne sont pas liés à l'émission et n'exploitent que la position en azimut de l'axe du lobe principal de l'antenne.

La plupart des éléments restent inchangés, vérifiant en cela à la fois :
- la non intrusion de l'invention dans le fonctionnement opérationnel du radar Mode S ;
- l'utilisation des mêmes éléments que ceux que le radar exploite ;
   ∘ en aérien au sens large :
      ▪ antenne, joint tournant, câbles de descente d'antenne ;
   ∘ en traitement au sens large :
      ▪ récepteur, traitement du signal, traitement de données, ..;
permettant ainsi une corrélation des réponses synchrones et asynchrones issues des mêmes avions.

Les rôles des principaux éléments ou fonctions ajoutés sont décrits ci-après. Dans le traitement temps réel 6, la gestion spatio temporelle 601 (Space Time Management) transmet la position azimut du lobe principal de l'antenne et l'heure au traitement 21 des réponses Asynchrones Mode S, cette fonction ayant été ajoutée (voir ci-dessous).

Dans le traitement du signal 7, on ajoute le traitement 21 des réponses Asynchrones Mode S (indépendamment des périodes d'écoutes associées aux interrogations). Ce traitement 21 est permanent et assure la détection et le décodage des réponses asynchrones (fruit) en exploitant séparément mais également les quatre diagrammes SUM, DIFF , CONT_Front et CONT_Back :
- pour détecter toutes les réponses reçues : asynchrones et synchrones ;
- pour décoder les réponses de tout type (DF0/4/5/11/16/17/18/20/21), les données du message et surtout en extraire l'adresse Mode S (incluant les squitters ADSB et TCAS);
- pour enrichir chaque réponse décodée de ses caractéristiques : heure de détection, azimut du lobe principal de l'antenne lors de la détection, puissance reçue sur SUM, DIFF , CONT_Front et CONT_Back et dépointage du fruit dans le lobe principal au cas où il soit reçu dans le lobe principal.

On enrichit également les réponses synchrones par la puissance mesurée sur SUM, DIFF , CONT_Front et l'azimut antenne.

Dans le traitement dans le lobe principal, et plus particulièrement dans l'extracteur Mode S 91, on enrichit les plots Mode S de leurs réponses synchrones avec pour chacune la puissance mesurée sur SUM, DIFF, CONT_Front et l'azimut antenne (l'heure de détection étant un attribut déjà requis en ATC) ainsi que les interrogations émises qu'elles aient ou non obtenues une réponse du transpondeur.

Dans le traitement multi tours, l'association 1002 des plots et pistage des cibles dans la couverture (Association & Tracker), transmet les pistes avec adresse Mode S avec les réponses enrichies de la puissance mesurée sur SUM, DIFF , CONT_Front et l'azimut antenne. On ajoute le traitement 22 du taux de réponse qui effectue notamment :
- l'association des fruits (réponse asynchrone) avec les plots synchrones de la couverture ;
- l'identification des sources de fruits ;
- l'estimation de la caractérisation des sources de fruits (localisation, rotation, puissance, taux d'interrogation « All call » (AC), puissance rayonnée, lobe antenne, ...) ;
- un traitement par piste lors d'un vol dans la couverture du radar avec :
   ∘ la caractérisation pour différentes tranches temporelles du taux de réponse ;
   ∘ la caractérisation pour différentes tranches temporelles du taux de blocage (non réponse d'un transpondeur à une interrogation du radar);
   ∘ la gestion (monitoring) de ces taux pour la génération de pré-alertes de transpondeur défaillant ;
- un traitement par zone découpée en cellules élémentaires, avec :
   ∘ la caractérisation pour différentes tranches temporelles du taux de réponse ;
   ∘ la caractérisation pour différentes tranches temporelles du taux de blocage ;
   ∘ le monitoring de ces taux pour génération de pré alerte de surcharge zonée.
- un traitement de détection des interrogateurs environnants incluant
   ∘ la pré-localisation de chaque interrogateur
   ∘ la caractérisation de l'interrogateur (rotation, puissance, taux d'interrogation « All call » (AC), puissance rayonnée, lobe antenne, ...).

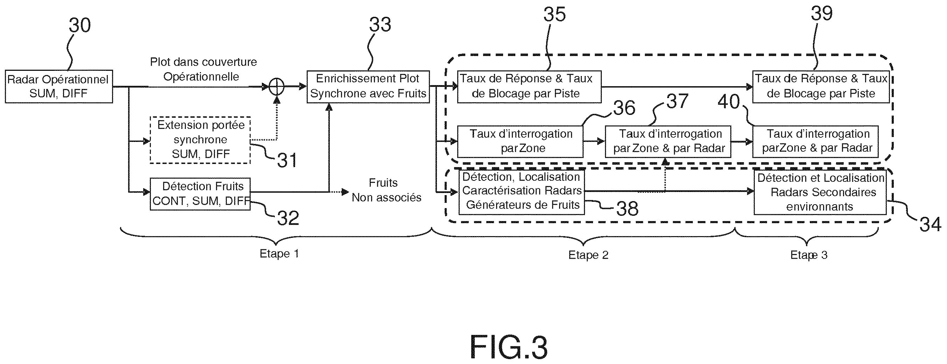

La figure 3 illustre le principe de l'invention en présentant les étapes possibles du procédé selon l'invention.

L'invention exploite avantageusement les ressources existantes d'un radar secondaire 30 Mode S opérationnel pour mesurer les caractéristiques :
- du spectre à 1090 MHz ;
- des transpondeurs ;
- des radars environnants ;
via les réponses et non réponses Mode S des transpondeurs équipant les avions dans la couverture du radar et cela sans modifier son comportement opérationnel. En particulier, il n'y a pas d'interrogations supplémentaires générées, mais uniquement une écoute passive de l'environnement radar.

Cette approche avec un seul radar peut être étendue dans un contexte à plusieurs radars secondaires permettant ainsi d'accroitre la surface couverte et d'améliorer la précision des mesures. Une « non réponse » veut dire que le radar n'a pas eu de réponse à son interrogation.

On décrit ci-après, dans les grandes lignes, les trois étapes de la figure 3.

### Première étape :

Dans cette première étape, on effectue une détection RF au niveau du radar secondaire opérationnel en utilisant de préférence jusqu'à quatre diagrammes de l'antenne pour assurer la meilleure couverture temporelle d'écoute efficace de réponses asynchrones, avec un niveau de signal suffisant. La détection consistant à :
- détecter et localiser toutes cibles Mode S possibles via leurs réponses synchrones enrichies ;
   ∘ en option : on réalise une extension 31 de la portée d'écoute de l'invention au-delà de la couverture opérationnelle du radar, permettant notamment de décorréler la portée opérationnelle du radar à celle de l'invention ;
- détecter les fruits 32, ces réponses non sollicitées par le radar Mode S étant :
   ∘ soit sollicitées par un autre senseur (autre Radar, WAM, notamment) partageant le même espace ;
   ∘ soit automatiquement générées par la cible elle-même, de type TCAS ou squitter ADS-B notamment.

Dans cette première étape, on effectue également l'association 33 des fruits aux plots (Mode S et/ou ADS-B) pour chaque cible détectée par le radar ou l'ADS-B par les fruits qu'elle a générés (sur la base de l'adresse Mode S unique du transpondeur comme identifiant de cible) entre deux détections synchrones successives en Mode S ou sur une base tour, par exemple. Cette association permettra par la suite, pour chaque cible de compter le nombre de réponses asynchrones et de réponses synchrones reçues par période de temps donné.

A la suite de la détection 33 des fruits, il y a des fruits que l'on ne sait pas associer à des plots (fruits non associés) typiquement ceux issus des cibles en dehors de la zone de couverture opérationnelle du radar mais néanmoins dont le niveau émis permet d'être reçu par l'invention du radar concerné.

En option on peut effectuer la classification des fruits de chaque cible par la source qui les a sollicités, sur la base de l'identifiant de l'interrogateur Il ou SI (II signifiant « Interrogator Identifier » et SI signifiant « Surveillance Identifier »). Dans la suite du brevet on emploiera le terme Il pour représenter aussi bien Il que SI

### Deuxième étape :

Dans cette deuxième étape, à partir des plots enrichis 33 on effectue la caractérisation 35 du taux de réponse et du taux de blocage de chaque cible par le radar.

Pour différentes périodes temporelles on mesure le taux de réponse 35 d'une cible en comptant toutes les réponses synchrones et asynchrones générées par chaque cible et reçues par le radar.

Pour différentes périodes temporelles on estime le taux de blocage de la cible vis-à-vis de ce radar selon 2 types distincts:
- soit au niveau des réponses que génère cette cible, par le rapprochement des non réponses de la cible dans le lobe du radar à ses interrogations Mode S avec les fruits générés par cette cible (incluant le temps mort après génération de réponse) : dans ce cas le transpondeur de la cible étant en cours de génération d'une réponse la non réponse est clairement identifiée;
- soit au niveau des réponses qu'elle ne génère pas, par l'estimation du taux d'interrogation de la cible ayant bloquée celle-ci sans génération de réponse. (interrogation rejetée, enchevêtrement d'interrogations par suite non interprétées, saturation du transpondeur atteinte, ..).

Une préalerte peut-être générée automatiquement quand les taux dépassent des seuils définis par l'utilisateur. Ceux-ci étant définis à priori pour détecter une défaillance potentielle du transpondeur de la cible :
- soit en rapport avec les minimas définis par l'OACI ;
- soit en rapport avec les hypothèses retenues lors de l'installation de ce radar.

On effectue aussi une caractérisation du spectre 1090 MHz (fréquence d'émission du radar pour les interrogations) dans la couverture du radar. Comme cela sera décrit par la suite, cette caractérisation du spectre 1090 MHz correspond en fait à la détermination 36, 37 du taux de réponses synchrones et asynchrones par zones de l'espace aérien couvert par le radar secondaire.

L'espace aérien étant découpé en cellules élémentaires 3D « Latitude-Longitude-Altitude » (par exemple selon un principe similaire aux cartes opérationnelles de couvertures Mode S du fonctionnement opérationnel d'un radar Mode S), on effectue par cellule (ou groupe de cellules) :
- le comptage du nombre de réponses synchrones et asynchrones générées par chaque cible et reçues par ce radar, ce qui permet notamment de construire une carte du taux de réponses selon la position des cibles dans l'espace selon plusieurs périodes temporelles sur une unité de temps donnée par exemple :
   ∘ une journée: pour une valeur moyenne
   ∘ la seconde : pour faire apparaître les crêtes de réponses ;
- le comptage du nombre de blocages de chaque cible aux interrogations de ce radar, ce qui permet de construire une carte du taux de blocage selon la position des cibles dans l'espace selon plusieurs périodes temporelles sur une unité de temps donnée (une journée ou la seconde par exemple).

Le nombre total de réponses synchrones et de réponses asynchrones issues des cibles de chaque cellule, par période de temps donné, permet d'obtenir un taux de réponse qui caractérise chaque cellule de l'espace couvert par le radar secondaire. Ce taux de réponses caractérise in fine le taux d'interrogations Mode S dans chaque cellule en séparant les fruits reçus selon leur nature soit sollicités par un senseur (DF11/4/5/20/21) soit transmis sans interrogation les ayant provoqués (DF0/16/17/18). En d'autres termes, il caractérise la densité d'interrogations de l'ensemble des radars secondaires environnant le radar secondaire mettant en oeuvre le procédé. On peut ainsi réaliser une cartographie de la densité d'interrogations Mode S dans l'environnement dudit radar.

Une préalerte peut-être générée automatiquement quand les taux dépassent des seuils définis par l'utilisateur. Ceux-ci étant définis a priori pour permettre à un opérateur de régulation du spectre 1090 MHz de reconfigurer localement les radars (en portée, en puissance émise, en tâches d'extraction de données BDS, ...) dans le but d'optimiser la Surveillance ATC en évitant les sur-interrogations des transpondeurs voire même leur blocage. Cette tâche pouvant être automatique ou manuelle :
- soit en rapport avec les minimas définis par l'OACI ;
- soit en rapport avec les hypothèses retenues lors de l'installation de ce Radar)
on effectue la caractérisation 38 de chacune des sources de fruits majeures du radar par l'estimation de :
- son identifiant Mode S,
- sa localisation géographique par rapport au radar,
- sa période de rotation (si rotatif),
- son taux d'interrogation « All call »,
- la largeur de son faisceau (si antenne directive),
- sa puissance rayonnée, ....

Cette approche permet à la fois dans un emploi ATC civil (ou les radars sont connus théoriquement en position, en caractéristiques et paramétrage) de vérifier que leurs réglages n'ont pas évolué (erreur humaine lors de maintenance ...) mais aussi dans un emploi ATC militaire de connaitre l'environnement secondaire d'un radar projeté sur un théâtre d'opération

### Troisième étape / extension à plusieurs radars :

Cette troisième étape est optionnelle, elle s'applique notamment dans un contexte multi-radars. Dans cette étape, on effectue soit la caractérisation 39, 40 du taux de réponse de chaque cible en multi-radars soit la localisation et caractérisation 34 des interrogateurs environnants.

Cette troisième étape compile en fait les résultats des trois étapes précédentes 35, 36, 37, 38 exécutées par plusieurs radars, au moins deux. On précise ici que a compilation veut dire le recalcul, cela ne correspond pas seulement à l'exploitation du résultat par chaque radar.

Dans un contexte à un seul radar (mono radar) la précision de la mesure du taux de réponse de chaque cible est limitée à la fois :
- par la portée du radar, donc elle ne couvre qu'une partie de l'espace donc des cibles en vol ;
- par la charge en réponses générées par l'ensemble des cibles, en effet en cas de fort taux instantané de fruits la performance de décodage d'un senseur diminue et donc ce dernier sous évalue le taux de réponse des cibles.

Dans une application à plusieurs radars secondaires (multi radars), l'espace de couverture des cibles et la précision de la mesure sont notablement améliorées. En d'autres termes les mesures du taux de réponse et du taux de blocage par piste, et les mesures du taux d'interrogation par zone et par radar ainsi que la localisation des autres interrogateurs sont améliorées.

En effet, par nature un centre de contrôle aérien (ATC civil ou militaire) a pour but d'assurer le suivi des avions sur des très longues distances, voire le vol complet, allant donc bien au-delà de la couverture d'un seul radar.

Par ailleurs, tant la puissance reçue des cibles que les configurations de chevauchement des réponses (synchrones et asynchrones) des cibles diffèrent selon la position des radars. Ainsi la prise en compte de toutes les réponses (et des « non réponses » de cibles) par l'ensemble des radars permet d'améliorer le taux de détection des réponses et ainsi de mieux évaluer le taux réel de réponse des cibles comme leur taux réel de blocage.

En ce qui concerne la caractérisation du spectre 1090 MHz, comme pour l'étape précédente, l'approche en multi-radars permet à la fois d'améliorer l'espace de couverture ainsi que la précision de la mesure des réponses des cibles.

Pour ce qui concerne la localisation des interrogateurs environnants la prise en compte d'une plus grande couverture, celle construite à partir de plusieurs radars, permet une meilleure détection et caractérisation des senseurs.

Avant de décrire plus en détail les étapes du procédé selon l'invention, on rappelle quelques informations concernant les fruits.

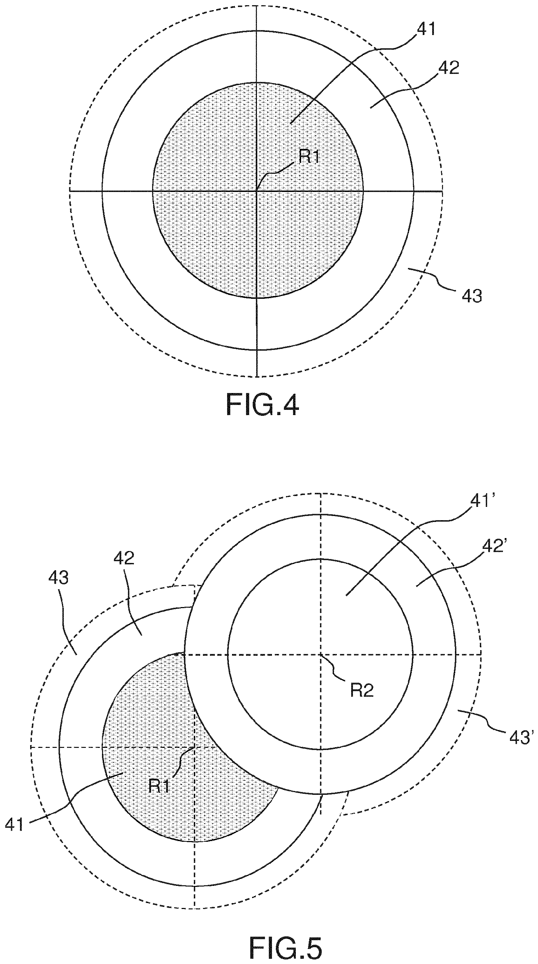

Les fruits reçus par un senseur sont toujours issus de cibles réelles et principalement de celles dans la couverture radioélectrique du senseur. L'invention exploite l'analyse des fruits pour réaliser les étapes précédemment décrites. Les figures 4 et 5 caractérisent ces fruits dans l'espace.

La figure 4 illustre la portée d'un radar à une altitude donnée. Pour garantir la surveillance dans une zone donnée, un radar secondaire (positionné au point R1) a usuellement une marge en émission afin de garantir une forte probabilité de détection (supérieure à 99%) dans sa zone de couverture 41 délimitée par un premier cercle centré en R1, pour qu'une cible dans cette zone 41, même équipée d'un transpondeur aux limites basses de sensibilité à 1030 MHz selon le standard OACI, puisse correctement interpréter l'interrogation Mode S. Les dialogues de ce radar avec les cibles dans sa couverture, typiquement DF4/5/20/21, seront perçues comme des fruits par un autre radar ayant une partie de couverture commune.

Des cibles dont le transpondeur est plus centré dans la norme de sensibilité à 1030 MHz, voire aux valeurs maximales de la norme, peuvent alors correctement interpréter (et donc répondre) sur une portée maximale supérieure pour la transmission à celle définie par cette première zone 41. Il en résulte une deuxième zone 42, délimitée par le premier cercle et un deuxième cercle également centré sur R1, où le radar positionné en R1 provoque des fruits DF11 chez les autres radars environnants.

De plus le radar situé en R1 doit assurer la détection des réponses synchrones à 1090 MHz qu'il a sollicitées par ses interrogations à 1030 MHz. En conséquence, sa portée en réception à 1090 MHz est en pratique supérieure par son faisceau SUM à sa couverture 41 voire même à la portée maximale d'émission délimitée par le deuxième cercle 42.

Il en résulte une troisième zone 43 délimitée par le deuxième cercle et un troisième cercle également centré sur R1, qui est une zone de réception de fruits pour le radar sans avoir de plots synchrones associés.

Dans la suite du texte on considérera la zone 43 comme la limite de réception des fruits du radar. En pratique selon les caractéristiques des diagrammes de l'antenne la zone de réception des réponses asynchrones (fruits) avec une bonne probabilité de détection par le radar peut être de l'ordre de la zone 41 voire légèrement inférieure par son faisceau CONT.

La figure 5 illustre une configuration à deux radars. Un deuxième radar positionné en un point R2 se situe dans l'environnement du radar situé au point R1, ce deuxième radar étant au centre de trois zones 41', 42', 43' ayant les mêmes caractéristiques que les zones précédentes 41, 42, 43 (c'est le même principe mais les valeurs en jeu ne sont pas les mêmes). Comme le montre la figure 5, ces zones se chevauchent. On pourra nommer par la suite les radars R1, R2 en référence à leur point de positionnement. Ces radars R1 et R2 sont des radars ayant chacun un identifiant II différent pour éviter les conflits au niveau des transpondeurs des avions.

Pour la suite de la description pour simplifier le raisonnement on considère des couvertures des 2 radars comme homogènes pour chacun d'eux dans tous les azimuts. L'utilisation de carte de couverture Mode S peut amener à une réduction de portée de couverture opérationnelle d'un radar dans un secteur donné de son azimut. Le principe de l'invention reste le même en l'appliquant en distinguant le secteur concerné des autres azimuts.

La zone de chevauchement entre deux radars se découpe en différentes zones selon le type de dialogue que chaque radar utilise avec les cibles des zones. L'invention exploite avantageusement les types de message échangés pour définir ces zones en azimut.

Les formats de réponses échangées entre un radar et le transpondeur d'un avion sont connus. Le type de réponse dépend à la fois :
- du type de radar ;
- de la tâche qui lui est attribuée dans la zone de la cible vis-à-vis du radar.

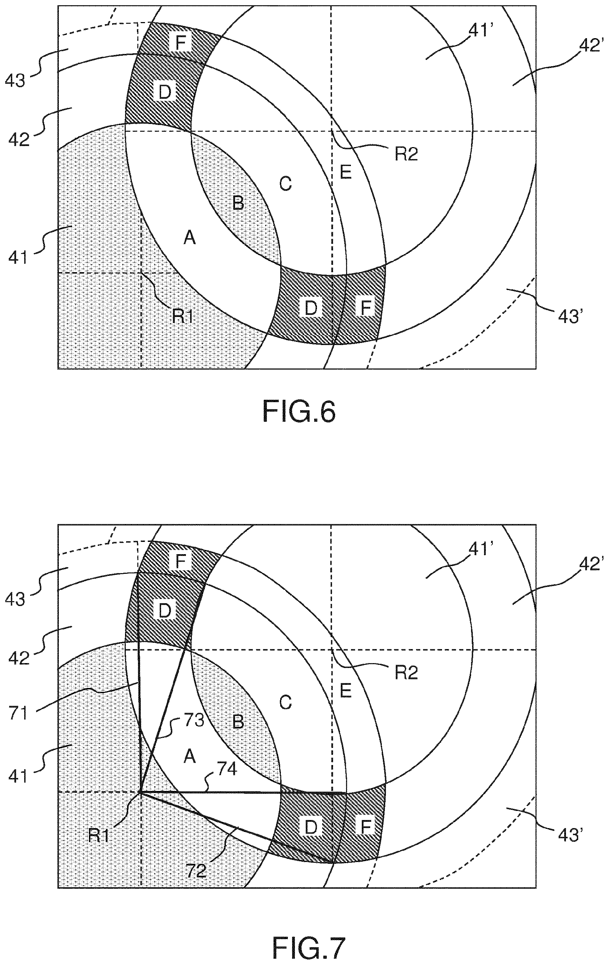

La figure 6 présente un zoom sur la zone de chevauchement des zones de d'émission et de détection 41, 42, 43, 41', 42', 43' de R1 et R2 définies précédemment.

Le tableau ci-dessous synthétise à titre d'exemple, dans le cas d'un fonctionnement usuel d'un radar Mode S, les tâches respectives de R1 et R2 selon l'appartenance de la cible à une des zones de chevauchement A, B, C, D, E, F illustrées par la figure 6.

**Tableau 1**

| Zones | Radar R1 (II 1) | Radar R2 (II 2) | Réponse synchrone pour R1 | Réponse asynchrone pour R1 (fruit) |
|---|---|---|---|---|
| A | Cible sous Surveillance Verrouillée sur II1 | Cible en dehors de la Surveillance Non Verrouillée sur II2 | DF4, DF5, DF20, DF21 | DF11 |
| B | Cible sous Surveillance Verrouillée sur II1 | Cible sous Surveillance Verrouillée sur II2 | DF4, DF5, DF20, DF21 | DF4, DF5, DF20, DF21 |
| C | Cible en dehors de la Surveillance Non Verrouillée sur II1 | Cible sous Surveillance Verrouillée sur II2 | DF11 | DF4, DF5, DF20, DF21 |
| D | Cible en dehors de la Surveillance Non Verrouillée sur II1 | Cible en dehors de la Surveillance Non Verrouillée sur II2 | DF11 | DF11 |
| E | Pas de réponse Synchrone | Cible sous Surveillance Verrouillée sur II2 | - | DF4, DF5, DF20, DF21 |
| F | Pas de réponse Synchrone | Cible en dehors de la Surveillance Non Verrouillée sur II2 | - | DF11 |

On note donc que le radar R1 peut recevoir des fruits de cibles pour lesquelles il n'a pas de plots synchrones associés

Dans la figure 6, on se positionne selon une coupe à une altitude donnée. La même approche peut être conduite en considérant différentes altitudes selon par exemple la coupe verticale passant par les deux radars R1 et R2. Comme pour un plan à altitude donnée, l'invention exploite les types de message échangés pour définir les zones de chevauchement en élévation.

A côté de l'approche spatiale des fruits décrite précédemment, on peut considérer une approche temporelle des fruits. Pour cette approche temporelle, on considère le cas des radars à antenne mécanique tournante soit la quasi-totalité des radars dans le monde de l'ATC civil voire même de la plupart des radars militaires de surveillance par nature de leur mission.

On détaille maintenant plus précisément les étapes du procédé selon l'invention, en se basant sur :
- l'architecture radar relative à l'invention (voir la figure 2) ;
- la caractérisation physique des fruits telle qu'exposée précédemment.

On commence par décrire les sous-étapes suivantes de la première étape : la détection RF, l'association 33 des fruits aux plots (Mode S et/ou ADS-B) et la caractérisation 32 des sources de fruits.

### Détection RF :

L'architecture de base d'un radar Mode S permet de recevoir :
- les réponses synchrones (sollicitées par le radar) à l'aide des diagrammes sélectifs en azimut SUM et DIFF ;
- les réponses asynchrones ou fruits (non sollicitées par le radar) à l'aide des quatre diagrammes SUM, DIFF, CONT-Front et CONT_Back.

L'invention exploite notamment les fruits dont le format tant en RF que dans la structure de la réponse est identique à celui des réponses synchrones.

Pour exploiter les fruits, dans un premier temps l'invention ajoute au radar Mode S classique une chaine de détection et décodage de ces réponses asynchrones (qu'un radar classique rejette usuellement) en les qualifiant avec les attributs usuels d'une réponse tels que notamment :
- heure de détection (précision meilleure que 10psec) ;
- azimut de l'antenne ;
- adresse Mode S du transpondeur émetteur ;
- contenu du message ;
- puissance de la réponse selon chaque diagramme de l'antenne.

Selon la distance de la cible au radar, le fruit peut être détecté sur plusieurs diagrammes simultanément aussi, lors de cette première étape les détections multiples (à la même heure) sont concaténées pour n'assurer qu'un seul message réponse Asynchrone par fruit.

A ce niveau on ne distingue pas la source du fruit qui est :
- soit sollicité par un autre senseur (autre Radar, WAM, notamment) partageant le même espace ;
- soit automatiquement généré par la cible elle-même (TCAS, ADS-B notamment).

En option à l'invention on peut étendre la couverture opérationnelle du radar (réglée par l'utilisateur comme inférieure à sa portée garantie) à sa portée maximale en synchrone (voir les zones 42 et 42') afin d'accroitre la zone de mesure de l'invention.

Les réponses synchrones supplémentaires ainsi obtenues (avec les mêmes interrogations opérationnelles du radar) sont traitées comme les autres réponses synchrones de la couverture du radar pour faire des plots qui auront donc les attributs usuels d'un plot tels que :
- heure de détection du Centre Plot ;
- adresse Mode S du transpondeur émetteur,
- azimut centre plot ;
- distance du plot ;
- pour chaque réponse ayant constituée le plot :
   - heure de détection (précision meilleure que 10µsec) ;
   - azimut de l'antenne ;
   - succès ou échec de l'interrogation (réponse reçue ou non) ;
   - dépointage dans le lobe ;
   - contenu du message ;
   - puissance de la réponse selon chaque diagramme de l'antenne (SUM, DIFF et CONT_Front).

De base, les réponses asynchrones longues de type ADS-B (DF17) permettent d'avoir la position de la cible en azimut et distance (à partir de l'information Latitude-Longitude-Altitude de son message) et ainsi de la localiser dans la couverture sans interrogation sélective (objectif premier de ce type de squitter pour le TCAS). L'invention exploite les plots ADS-B comme les plots Mode S du Radar.

### Association des fruits aux plots (Mode S et/ou ADS-B) :

Pour chaque cible localisée dans l'espace de couverture opérationnelle ou étendue du radar :
- soit par le Radar via des interrogations sélectives ayant générées des réponses synchrones (DF4/5/11/20/21) ;
- soit en ADS-B (réponse longue asynchrone DF17).
l'invention associe à cette cible les fruits qu'elle a générés (sur la base de l'adresse Mode S unique du transpondeur comme identifiant de cible) :
- soit entre deux détections synchrones successives en Mode S (proche du tour) ;
- soit sur une base tour (par exemple).

Le fruit étant par nature asynchrone on détermine la position de la cible au moment de détection du fruit par exemple en interpolant la position de la cible à partir de sa trajectoire établie par le radar dans ses fonctions opérationnelles (radar et ADS-B intégrés) à l'heure de réception du fruit.

Le fruit est alors complètement caractérisé comme l'est une réponse synchrone.

### Caractérisation de la source des fruits

Cette caractérisation peut se faire par l'identification, par la période de rotation de l'antenne, par la localisation, par le taux d'interrogation AC, par le lobe de l'antenne ou encore par la puissance rayonnée de la source des fruits, comme cela est décrit par la suite. Il est possible de déterminer tout ou partie de ces caractéristiques. On considère ici, à titre d'exemple le radar R2 comme source de fruits.

### Identification de la source des fruits

On cherche à obtenir une classification des fruits par radars les ayant provoqués (c'est-à-dire par radars ayant émis l'interrogation ayant provoqué la réponse du transpondeur de l'avion). Pour décrire cette description on considère le radar R1 pollué par le radar R2. La démarche serait identique avec plusieurs radars secondaires environnants.

Etant donné que les réponses sont de type :
- DF11 : détenant de base dans son message l'identifiant du radar (dans notre exemple le radar R2) ;
- DF4, DF5, DF20 et DF21 : ne précisant pas le destinataire de la réponse.

En référence à la figure 6 et au tableau 1, il est donc nécessaire d'estimer pour les zones B et C l'identifiant du radar.

A cet effet, on considère à la fois une approche géographie (spatiale) et temporelle. La zone géographique d'influence en azimut du radar R2 dans le référentiel du radar R1 est limitée comme le montre la figure 7 qui illustre l'azimut d'influence de R2 dans le référentiel de R1 (à partir du zoom de la figure 6).

Les fruits DF11 provoqués par R2 (notés DF11_R2) sont localisés sur les cibles compris entre les azimuts 71, 72 « Début max » et « Fin max » alors que les cibles provoquant les fruits DF4, DF5, DF20 et DF21 sont nécessairement localisés entre les azimuts 73, 74 « Début » et « Fin ».

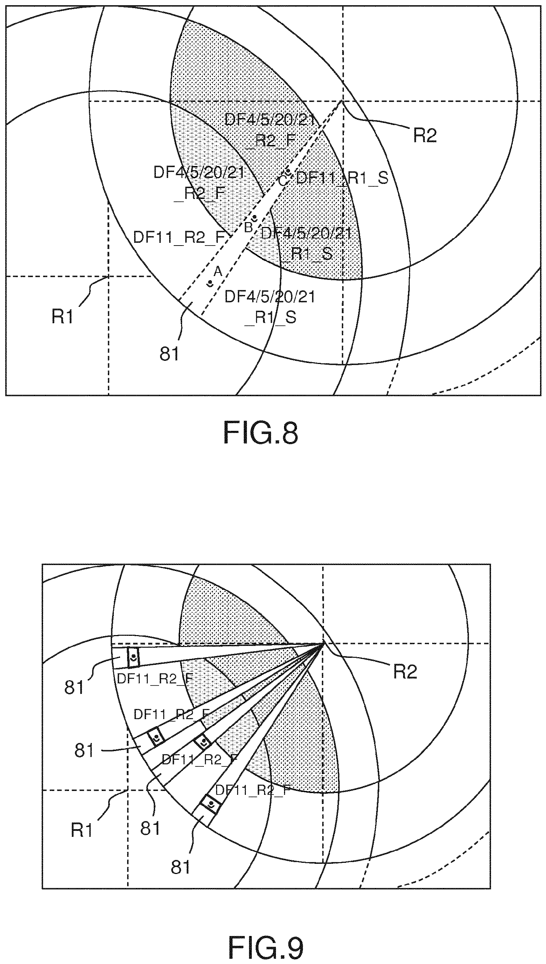

Pour l'approche temporelle, on considère le faisceau 81 de R2 éclairant à un instant donné une zone de chevauchement. A titre d'exemple, la figure 8, présente les réponses DF4/5/20/21_R1_S correspondant aux réponses DF4, DF5, DF20 et/ou DF 21 dues à R1 vues comme synchrones par R1, ainsi que les réponses DF11_R2_F correspondant à la réponse DF11 dues à R2 vues comme Fruit (asynchrone) par R1.

Les fruits DF11_R2 d'une cible de la zone A sont reçus par R1 quasi-simultanément avec les fruits DF4, DF5, DF20 et DF21 des cibles présentes dans les zones B et C (sur la durée du lobe).

Selon l'invention, on attribue aux fruits DF4, DF5, DF20 et DF21 (sans information dans la réponse sur le radar (code II) qui les a interrogés), une estimation du code Il de l'interrogateur de R2 :
- si les cibles ayant émis DF11_R2 sont comprises entre les azimuts « Azimut_Début_Max_R2 » 71 et « Azimut_Fin_Max_R2 » 72 (soient ici les fruits de la cible A) ;
- si les cibles ayant émis DF4, DF5, DF20 et DF21 sont comprises entre les azimuts « Azimut_Début_R2 » 73 et « Azimut_Fin_R2 » 74 (soient ici les fruits des cibles B et C) ;
- et si les fruits DF4, DF5, DF20 et DF21 sont quasi simultanés des fruits DF11_R2 selon le séquencement classique All Call (AC) et Roll Call (RC) recommandé par Eurocontrol.

Cette opération est par exemple renouvelée à chaque fois qu'un fruit DF4, DF5, DF20 et DF21 est associé à un plot de R1 afin d'identifier de plus sa source.

### Période de rotation de l'antenne de la source des fruits

On estime ici la vitesse de rotation de l'antenne de R2. Pour cela, pour chaque cible on calcule à chaque tour une estimée de la période de rotation de R2 à partir du temps écoulé entre ses fruits détectés d'un tour sur l'autre tout en tenant en compte du déplacement de la cible obtenue à partir des plots de R1.

Considérant que la vitesse de rotation d'un radar est classiquement très stable on intègre l'ensemble des estimations de la période de rotation de R2 sur un temps assez long pour avoir une évaluation précise.

On retient plusieurs durées d'intégration simultanément :
- durée très longue de l'ordre de 1 heure pour obtenir régulièrement une mesure précise (radar ATC civil) ;
- durée longue de l'ordre de quelques minutes pour obtenir très régulièrement une mesure correcte mais moins précise (typiquement pour un radar en ATC militaire) que l'on piste ensuite dans le temps pour suivre d'éventuels changements de vitesse de rotation, de séquencement dans ses interrogations voire même de sa localisation.

### Localisation de la source des fruits

On estime ici au moins l'azimut de R2 vis-à-vis de R1, en exploitant le fait que le faisceau d'un radar secondaire est suffisamment fin (voir figure 8) pour n'activer des fruits que dans une zone limitée de l'espace. Ainsi, en exploitant les fruits quasi simultanés de R2, on peut établir une estimation de la direction de R2. Ceci est effectué dès que les fruits de R2 sont considérés comme quasi simultanés.

### Taux d'interrogation AC de la source de fruits

On estime ici la période d'interrogation « All Call » (AC) de R2.

Alors que les fruits DF4, DF5, DF20 et DF21 sont nécessaires à la réalisation des fonctions ELS et EHS définies par Eurocontrol, les fruits DF11 ne sont que des « résidus » dus :
- au protocole Mode S de recueil des nouveaux avions (entrants dans la couverture, au décollage, ..) ;
- et aux tolérances importantes des transpondeurs des avions et de la propagation qui conduisent à réduire les zones de verrouillage (blocage protocolaire des réponses DF11).

Les réponses DF11 sont issues des périodes d'interrogation AC à respecter. Les interrogations AC de R2 provoquent des fruits DF11_R2 dans sa zone de non verrouillage.

Chaque fruit étant :
- daté par R1 lors de sa détection ;
- positionné en distance par R1 suite à son association à un Plot de R1.
Ensuite, les différentes estimations de périodes AC sont accumulées selon différentes durées :
- soit assez longue pour rétrécir la zone de localisation de R2 avec une acuité suffisante pour un radar fixe (le cas le plus usuel) ;
- soit moins longue, pour gérer le cas de radar ATC militaire ayant des managements non permanents des interrogations.

Un histogramme de ces périodes AC de R2 est alors réalisé. Il montre plusieurs pics de corrélation selon la valeur du PR (probabilité de réponse demandé par le radar au transpondeur de l'avion) qu'emploie le radar R2 :
- à la période AC, le pic étant de valeur très élevé si le PR = 0 soit une probabilité de réponse égale à 1 ;
- à deux fois période AC : pic de valeur étant très élevé si le PR = 1 soit une probabilité de réponse de 0,5.

L'histogramme permet de connaître à la fois la PRF_AC (période d'interrogation UF11 dans les AC) mais aussi le PR moyen employé par R2 dans sa zone de chevauchement avec R1.

### Lobe de l'antenne de la source de fruits

On estime ici la largeur du lobe d'interrogation du radar R2.

Les interrogations AC de R2 provoquent des fruits DF11_R2 par chaque cible, non verrouillée sur le code Il de R2, présente dans son faisceau en sollicitant un taux de réponse défini par le PR transmis dans l'interrogation AC de R2 (AC_R2).

On considère connu le PR employé par R2 dans la zone de chevauchement avec R1 comme décrit précédemment.

Comme le montre la figure 9, lorsque le faisceau 81 de R2 interroge une cible de la zone A celle-ci répond à chaque interrogation AC_R2 selon son PR pendant la durée du lobe d'interrogation effectif de R2.

Le procédé selon l'invention, à chaque tour de R2, pour chaque cible ayant émis plusieurs DF11_R2 de la zone A :
- estime l'azimut dans le référentiel R1 de chaque fruit à partir :
   ∘ de l'azimut R1 du plot à l'heure du fruit à l'aide de la trajectoire de la cible calculée en opérationnelle par R1 ;
   ∘ du gisement antenne R1 du plot à l'heure du fruit en utilisant l'azimut de l'antenne à l'heure du fruit ;
   ∘ de l'azimut R1 du fruit à partir de la différence de son gisement antenne R1 et du gisement du plot complété de l'azimut du plot ;
- calcule l'azimut R2 de chaque fruit en exploitant la position estimée de R2 ;
- calcule une estimée du lobe d'interrogation de R2 à partir de l'écart azimut R2 maximal en 2 fruits de la même cible dans un tour de R2.

Ensuite, ces différentes estimées du lobe d'interrogation de R2 sont par exemple accumulées selon une durée assez longue pour avoir une acuité suffisante pour un radar de faisceau fixe (le cas le plus usuel).

La largeur du lobe d'interrogation AC de R2 est évaluée à partir :
- de la largeur en azimut du bloc principal d'occurrences ;
- majorée de l'azimut équivalent d'une période AC de R2 multipliée par le PR+1.

### Puissance rayonnée de la source des fruits

Dans cette partie, on estime de façon approximative la puissance rayonnée au travers des interrogations AC de R2.

On décrit maintenant les sous-étapes de la deuxième étape : la caractérisation 35 du taux de réponses et de blocage par cible au niveau d'un radar et la caractérisation du spectre 1090 MHz par zone au niveau d'un radar.

### Caractérisation du taux de réponses et du taux de blocage par cible au niveau d'un radar

On peut noter que, pour un radar donné, en fonction de ses caractéristiques propres on définit :
- sa couverture opérationnelle radar (usuel) ;
- sa couverture de mesure de l'environnement (pour les besoins de l'invention).

Il est à noter que dans l'exemple de la figure 4, la couverture opérationnelle est considérée égale à la couverture de mesure de l'environnement.

Pour caractériser le taux de réponse d'un transpondeur le radar effectue par exemple, pour l'ensemble des cibles dans la couverture de mesure :
- la mesure du taux global de réponses de chaque cible reçues par le radar en comptant toutes les réponses synchrones et asynchrones générées par cible ;
- la décomposition du taux global de réponses de chaque cible reçues par le radar :
   ∘ par longueur de réponses générées, courte ou longue (selon les spécifications officielles) ;
   ∘ par type de réponses :
      ▪ sollicitées dans la couverture ;
      ▪ sollicitées hors couverture ;
      ▪ non sollicités.

Ces opérations sont par exemple effectuées pour différentes périodes temporelles.

En ce qui concerne le taux de blocage d'un transpondeur, celui-ci est représentatif de l'encombrement du spectre 1090 MHz. En effet quand un transpondeur reçoit une interrogation il se bloque pour les autres interrogateurs selon :
- qu'il répond (il ne peut alors traiter une autre interrogation) ;
- qu'il ne répond pas car :
   ∘ il n'est pas destinataire ;
   ∘ il n'est pas dans le lobe d'antenne du radar ;
   ∘ le message décodé de l'interrogation est erroné ;
   ∘ il a atteint son maximum de réponses générées.

Pour une cible donnée, le radar détermine s'il y a blocage du transpondeur en analysant les fruits (par exemple pour R2) de cette cible. Un exemple d'analyse est donné ci-après :
- un des fruits est reçu dans un temps justifiant une non réponse du transpondeur, celui-ci étant donc normalement occupé ;
- si aucun fruit ne justifie une non réponse synchrone, le radar R1 déclare alors un blocage du transpondeur (dans l'exemple des figures 5 à 9).

Pour décider de l'occupation normale d'un transpondeur, le radar R1 calcule par exemple la position des interrogations respectives de R1 et R2 lorsqu'elles sont reçues au niveau du transpondeur. La non réponse du transpondeur est justifiée si l'interrogation de R1 arrive au niveau du transpondeur dans l'intervalle de temps situé après l'interrogation de R2 et avant la fin du temps mort alloué au transpondeur après qu'il a émis la réponse vers R2.

Pour l'ensemble des cibles dans la couverture de mesure de l'environnement, le radar peut effectuer la mesure du taux de blocage d'une cible suivie par le radar, en comptant toutes les non réponses non justifiées générées par la cible et en les datant, pour différentes périodes temporelles.

Une préalerte est par exemple générée automatiquement quand les taux de blocage dépassent des seuils définis par l'utilisateur. Ces seuils sont définis a priori pour détecter une défaillance potentielle du transpondeur d'un avion si le taux de réponse du transpondeur lors de la période temporelle précédente n'excède pas les limites de l'OACI.

### Caractérisation du spectre 1090 MHz par zone au niveau d'un radar

La caractérisation est très similaire à celle décrite pour la caractérisation des taux de réponse et de blocage.

Elle se focalise sur les zones géographiques au lieu de se focaliser sur les transpondeurs. On décrit ci-après une caractérisation du spectre par zone, puis on détaille cette caractérisation du spectre par zone et par radar interférant.

L'espace aérien étant découpé en cellules élémentaires 3D « Latitude-Longitude-Altitude » (par exemple selon un principe similaire aux cartes de couvertures Mode S du fonctionnement opérationnel d'un radar Mode S), par cellule :
- on compte toutes les réponses synchrones et asynchrones générées par chaque cible (présentes dans la cellule et reçues par ce radar), ce qui permet de construire une carte du taux de réponses selon la position des cibles dans l'espace ;
- on compte tous les blocages de chaque cible aux interrogations de ce radar, ce qui permet de construire une carte du taux de blocage selon la position des cibles dans l'espace.

Ces opérations étant par exemple reconduites pour différentes périodes temporelles.

Il est à noter que les squitters ADS-B sont pris en compte dans les réponses asynchrones puisqu'étant émis par les mêmes transpondeurs entrant donc en compte dans les limites de l'OACI.

Pour la caractérisation du spectre 1090 MHz par zone et par radar interférant, on peut utiliser les résultats de la sous-étape de caractérisation des sources de fruits décrites précédemment où on effectue une première caractérisation de chaque autre radar interférant notablement avec le radar R1 (radar R2 dans l'exemple considéré), c'est-à-dire ayant une zone de chevauchement suffisamment importante avec une présence notable de cibles à la fois permettant une mesure mais plus simplement justifiant d'y prêter intérêt.

Pour chaque cellule on décompose le taux de réponses global dans la cellule :
- en identifiant chacun des radars interférant dans cette cellule (ayant généré des fruits dans cette cellule) ;
- en y associant le taux de réponses dû à chacun des radars ;
- en précisant la nature et le taux des réponses générées pour chacun des radars.

On associe par ailleurs à cette cellule des caractéristiques de chaque radar interférant, ces caractéristiques étant par exemple :
- la position du radar interférant avec le radar R1 ;
- la vitesse de rotation de l'antenne ;
- la largeur du lobe d'interrogation ;
- le taux d'interrogation « All Call » ;
- la puissance rayonnée.

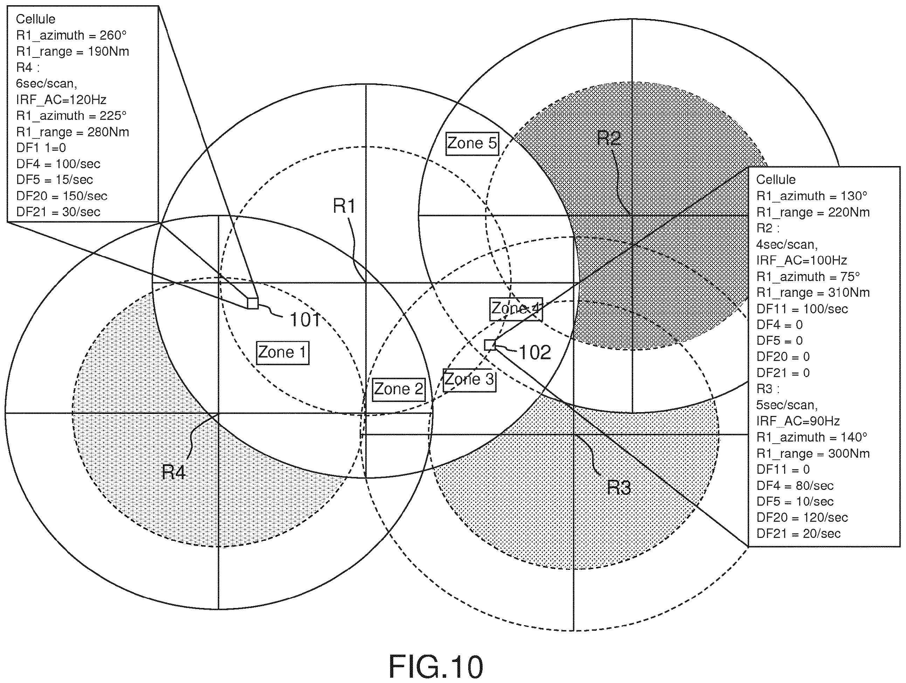

La figure 10 illustre en exemple une synthèse des taux de réponses par zone par radar, dans un exemple à quatre radars secondaires où trois radars, R2, R3 et R4, interfèrent avec le radar R1, deux radars R3 et R4 ayant été ajoutés aux radars R1 et R2 par rapport aux exemples précédents. Les couvertures radars se chevauchent selon plusieurs zones en exemple telles que le chevauchement dans la couverture opérationnelle de R1 de.
- Zone 1 ; la couverture opérationnelle de R4 seul ;
- Zone 2 ; la portée d'émission de R4 et R3 ;
- Zone 3 ; la portée d'émission de R3 et la couverture opérationnelle de R2 ;
- Zone 4 : la portée d'émission de R3 et R2 ;
- Zone 5 ; la couverture opérationnelle de R2 seul ;
Plus précisément, la figure 10 présente une carte géographique du taux d'interrogation dans la couverture du radar R1, où deux cellules d'espace élémentaires 101, 102 sont représentées à titre d'exemple. Les informations de taux de réponses sont par ailleurs complétées par des informations caractérisant les sources de réponses asynchrones.

Les valeurs n'y sont données que comme exemple de présentation de synthèse sans volonté aucune de réalité (valeur maximale sans base de temps de mesure associée, ...).

La première cellule 101 est située dans une première zone de chevauchement (zone de chevauchement entre les couvertures du radar R1 et du radar R4). Dans le référentiel du radar R1 cette cellule est située à un azimut de 260° et à une distance de 190 Nm. Pour cette cellule, la source qui génère les réponses asynchrones est le radar R4. Les caractéristiques obtenues pour cette source sont :
- sa localisation, à un azimut de 225° et à une distance de 280 Nm dans le référentiel de R1 ;
- la vitesse de rotation de son antenne, 6 secondes par scan ;
- la période d'interrogation « All Call », donnée ici par la fréquence d'interrogation « All Call », IRF_AC égale à 120 Hz.

Les taux crêtes de réponses synchrones et asynchrones reçues de cibles présentes dans cette cellule 101 sont :
- pour DF11 égal à 0 ;
- pour DF4 égal à 100 par seconde ;
- pour DF5 égal à 15 par seconde ;
- pour DF20 égal à 150 par seconde ;
- pour DF21 égal à 30 par seconde.

Le taux de réponse global dans la cellule est la somme de tous ces taux.

La deuxième cellule 102 est située dans une autre zone de chevauchement (zone 3 de chevauchement entre les couvertures des radars R1, R2 et R3). Dans le référentiel du radar R1 cette cellule est située à un azimut de 130° et à une distance de 220 Nm. Pour cette cellule, les sources qui génèrent les réponses asynchrones sont le radar R2 et le radar R3.

Les caractéristiques obtenues pour la source R2 sont :
- sa localisation, à un azimut de 75° et à une distance de 310 Nm ;
- la vitesse de rotation de son antenne, 4 secondes par scan ;
- la fréquence d'interrogation « All Call », IRF_AC égale à 100 Hz.

Les taux crêtes de réponses synchrones et asynchrones générés par R2 sont :
- pour DF11 égal à 100 par seconde ;
- pour DF4 égal à 0 ;
- pour DF5 égal à 0 ;
- pour DF20 égal à 0 ;
- pour DF21 égal à 0.

Les caractéristiques obtenues pour la source R3 sont :
- sa localisation, à un azimut de 140° et à une distance de 300 Nm ;
- la vitesse de rotation de son antenne, 5 secondes par scan ;
- la fréquence d'interrogation « All Call », IRF_AC égale à 90 Hz.

Les taux crêtes de réponses synchrones et asynchrones générés par R3 sont :
- pour DF11 égal à 0 ;
- pour DF4 égal à 80 par seconde ;
- pour DF5 égal à 10 par seconde ;
- pour DF20 égal à 120 par seconde ;
- pour DF21 égal à 20 par seconde.

Le taux global de réponses synchrones et asynchrones issues de cibles évoluant dans cette cellule 102 est la somme de tous ces taux.

Au niveau d'un seul radar, l'invention propose aussi de réaliser les mêmes analyses dans le but de détecter les radars environnants et de les caractériser (sans objectif d'évaluer le taux d'interrogations).

On décrit maintenant les sous-étapes de la troisième étape qui est optionnelle. Ces sous-étapes sont la caractérisation du taux de réponse et du taux de blocage de chaque cible en multi-radars, la caractérisation du spectre 1090 MHz par zone et interférant en multi-radars ainsi que la localisation des radars environnants en multi-radars.

### Caractérisation du taux de réponse et blocage de chaque cible en multi-radars

En mono radar (exemple du radar R1 des exemples précédents), la précision de la mesure du taux de réponse de chaque cible est limitée à la fois par la portée du radar et par la charge en réponses générées par l'ensemble des cibles.

L'objectif de cette sous-étape est donc de réaliser les mêmes tâches que la sous-étape de caractérisation décrite précédemment en mono radar (quatrième des sous-étapes), en exploitant les informations transmises par chacun des radars effectuant cette quatrième sous-étape. Ainsi en exploitant ces mesures à un niveau supérieur du système ATC on peut améliorer la précision des mesures et conforter les identifiants des radars interférant s'ils sont membres de ce réseau de radars effectuant cette quatrième sous-étape. Les informations transmises sont :
- les trajectoires des cibles gérées par chaque radar (idem pour un centre de contrôle ATC usuel) ;
- pour chaque plot :
   ∘ les interrogations dans son lobe, datées, et l'état (échec ou succès avec pointeur sur la réponse dans ce cas) ;
   ∘ les réponses synchrones, datées et caractérisées par nature, puissance, contenu notamment ;
- pour chaque fruit : réponses datées et caractérisées par nature, puissance, contenu, ...

L'approche multi-radars permet donc de construire pour chaque cible dans la zone de couverture multi-radars son taux de réponse et de blocage de manière plus précise et plus fiable, notamment :
- en comptabilisant le taux d'interrogation de chaque radar sur cette cible et en éliminant donc de la statistique les fruits déclarés par un autre radar du réseau qui soient datés synchrones de la réception au niveau du transpondeur, ainsi :
   ∘ les réponses non détectées en tant que fruit pour des raisons de portée ou de chevauchement de réponses sont cette fois bien prises en compte
   ∘ les blocages supposés sont confirmés ou non si une interrogation d'un autre radar est datée synchrone d'une interrogation du radar ayant déclarée le blocage ;
- en supprimant les doublons de fruits détectés simultanément par plusieurs radars du réseau ;
- en remplaçant les estimations de caractéristiques des radars du réseau par les valeurs connues par les installateurs de ces radars en ATC civil.

La gestion de ces données par cible peut permettre de générer une préalerte quand les taux de réponses ou de blocage dépassent des seuils définis par l'utilisateur pointant en cela des défaillances de transpondeur devant être réparé (en deçà des minimums définis par l'OACI).

*Caractérisation du spectre 1090 MHz par zone et par interférant en multi-radars.*

Comme la précédente sous-étape, l'approche en multi-radars permet à la fois d'améliorer l'espace de couverture ainsi que la précision de mesure des réponses des cibles.

L'approche multi-radars permet donc de construire dans la zone de couverture multi-radars de manière plus précise et plus fiable:
- une carte du taux de réponses ;
- pour chaque élément contribuant (radar du réseau, ADS-B, autres) la nature de la réponse et son taux ;
- une carte du taux de blocage ;
pour différentes périodes temporelles.

La gestion de ces données par zone peut permettre de générer une préalerte quand les taux de réponses ou de blocage de certaines cellules dépassent des seuils définis par l'utilisateur.

De plus, le croisement de ces informations permet à l'opérateur d'identifier la source de blocage d'un transpondeur et lui permet donc :
- soit de construire une politique de réglage différent de certains radars du réseau (réduire la puissance, la portée, le taux d'interrogation, ...) pour réduire le taux de réponse localement,
- soit de rechercher une source externe de pollution non référencée dans le réseau de radars.

Typiquement dans une configuration de radars militaires projetés sur un théâtre d'opération, l'approche multiradars de détection et de localisation selon les mêmes principes que ceux cités ci-dessus permet d'accroitre à la fois la couverture de l'espace analysée et le taux de détection /localisation d'autres radars.

## Revendications

1. Procédé de caractérisation de la densité d'interrogations et de réponses Mode S dans l'environnement (41, 42, 43) d'au moins un radar secondaire en opération (R1), ledit environnement étant défini par le domaine de l'espace aérien couvert par ledit radar (R1), ledit environnement étant parcouru par des cibles Mode S, une cible Mode S étant une cible émettant une réponse aux interrogations Mode S émises par un radar secondaire, **caractérisé en ce qu'**il comporte :
- une première étape dans laquelle ledit radar (R1) effectue :
o la détection et la localisation de cibles Mode S au moyen de leurs réponses synchrones aux interrogations émises par ledit radar (R1) ou leurs positions transmises dans des squitters ADS-B long ;
o la détection (32) des réponses asynchrones émises par les mêmes cibles Mode S, donc non sollicitées par ledit radar (R1) ;
o pour chaque cible localisée, l'association (33) de ses réponses asynchrones avec les réponses synchrones audit radar (R1) ou les positions données par lesdits squitters ADS-B ;
- une deuxième étape dans laquelle ledit radar (R1) effectue :
o à partir de ladite association, la détermination (35) du taux de réponses de chaque cible en comptant le nombre de réponses synchrones et asynchrones reçues de ladite cible pour différentes périodes de temps donnée ;
o ledit environnement étant découpé en cellules d'espace élémentaires (101, 102), la détermination (36, 37) du taux de réponses par cellules en comptant le nombre de réponses synchrones et asynchrones reçues par chaque cible localisée dans chaque cellule, ledit taux caractérisant la densité d'interrogations et de réponses Mode S par cellule ou par groupe de cellules

2. Procédé selon la revendication 1, **caractérisé en ce que** la détection (32) des réponses asynchrones par ledit radar (R1) est effectuée par un traitement (21) permanent de détection et de décodage des réponses asynchrones reçues sur chaque diagramme d'antenne (11, 12, 13, 14), ledit traitement exploitant séparément chacun desdits diagrammes.

3. Procédé selon la revendication 2, **caractérisé en ce que** lesdits diagrammes sont le diagramme somme (11), le diagramme différence (12), le diagramme de contrôle avant (13) et le diagramme de contrôle arrière (14).

4. Procédé selon l'une quelconque des revendications précédentes, **caractérisé en ce que** lesdites réponses asynchrones non sollicitées par ledit radar (R1) sont :
- des réponses sollicitées par un autre radar secondaires (R2, R3, R4) pouvant être tous types d'interrogateurs ;
- et/ou des réponses automatiquement générées par lesdites cibles, comprenant des réponses de type squitter ADS-B ou TCAS.

5. Procédé selon l'une quelconque des revendications précédentes, **caractérisé en ce que** dans ladite deuxième étape, ledit radar (R1) effectue la caractérisation des sources (R2, R3, R4) de réponses asynchrones, lesdites sources étant des radars secondaires, pouvant être tous types d'interrogateurs, la caractérisation d'une source étant réalisée par au moins une caractéristique parmi les caractéristiques suivantes :
- l'identification de ladite source ;
- la période de rotation de l'antenne de ladite source ;
- la localisation de ladite source ;
- le taux d'interrogations « All Call » de ladite source ;
- la largeur du lobe d'interrogation de ladite source ;
- la puissance rayonnée par ladite source.

6. Procédé selon l'une quelconque des revendications précédentes, **caractérisé en ce qu'**un signal d'alerte est généré quand le taux de réponses reçues d'une cible dépasse un seuil donné.

7. Procédé selon l'une quelconque des revendications précédentes, **caractérisé en ce qu'**un signal d'alerte est généré quand le taux de réponse d'au moins une cellule (101, 102) dépasse un seuil donné.

8. Procédé selon l'une quelconque des revendications précédentes, **caractérisé en ce que**, le blocage d'une cible étant l'incapacité de ladite cible à émettre une réponse à une interrogation Mode S, dans ladite deuxième étape ledit radar (R1) effectue la caractérisation du taux de blocage d'une cible en analysant les réponses asynchrones de ladite cible :
- soit en caractérisant la non réponse du transpondeur de cette cible :
o par son occupation à générer une réponse à l'aide d'un fruit synchrone de l'interrogation n'ayant pas eu de réponse au niveau du transpondeur ;
∘ ou par un taux de réponse au-delà des limites OACI dans la période antérieure à la non réponse à une interrogation ;
- soit en supposant une autre hypothèse correspondant à :
o un chevauchement d'interrogations émises par plusieurs senseurs non interprétées par le transpondeur de cette cible ;
o un transpondeur de cette cible ayant atteint son maximum de taux de réponse bien qu'inférieur au minimum de l'OACI.

9. Procédé selon l'une quelconque des revendications précédentes, **caractérisé en ce que** ladite première étape et ladite deuxième étape étant exécutées en contexte multiradars soit par au moins deux radars secondaires, lesdits taux de réponses obtenus par chacun desdits au moins deux radars sont calculés en considérant l'ensemble des réponses synchrones et asynchrones des deux radars pour obtenir des taux de réponses globaux plus précis, la densité d'interrogation étant **caractérisée** au moyen de ces taux globaux.

10. Procédé selon les revendications 8 et 9, **caractérisé en ce que** lesdits taux de blocages obtenus par chacun desdits au moins deux radars sont calculés en considérant l'ensemble des réponses synchrones et asynchrones des deux radars pour obtenir un taux de blocage global plus précis.

11. Procédé selon l'une quelconque des revendications 9 ou 10, **caractérisé en ce que** les informations obtenues de chacun desdits au moins deux radars sont transmises à un centre de contrôle aérien et exploitées par ledit centre.

12. Procédé selon la revendication 11, **caractérisé en ce que** lesdites informations sont exploitées pour permettre une régulation de l'ensemble des radars secondaires afin de supprimer les zones de sur interrogations, de blocage des transpondeurs ainsi que les transpondeurs défaillants afin d'accroitre la sécurité de la surveillance ATC.

13. Radar secondaire, **caractérisé en ce qu'**il est apte à mettre en oeuvre le procédé selon l'une quelconque des revendications 1 à 12.

## Patentansprüche

1. Verfahren zum Charakterisieren der Dichte von Mode-S-Abfragen und - Antworten in der Umgebung (41, 42, 43) von mindestens einem in Betrieb befindlichen Sekundärradar (R1), wobei die Umgebung durch den von dem Radar (R1) abgedeckten Luftraumbereich definiert ist, wobei die Umgebung von Mode-S-Zielen durchlaufen wird, wobei ein Mode-S-Ziel ein Ziel ist, das eine Antwort auf die von einem Sekundärradar gesendeten Mode-S-Abfragen sendet, **dadurch gekennzeichnet, dass** es Folgendes beinhaltet:
- einen ersten Schritt, in dem das Radar (R1) Folgendes durchführt:
o Erkennen und Orten von Mode-S-Zielen anhand ihrer synchronen Antworten auf die von dem Radar (R1) gesendeten Abfragen oder ihrer in erweiterten Squittern ADS-B übertragenen Positionen;
o Erkennen (32) von asynchronen Antworten, die von denselben Mode-S-Zielen gesendet und daher nicht von dem Radar (R1) angefordert wurden;
o Assoziieren (33), für jedes geortete Ziel, von dessen asynchronen Antworten mit den synchronen Antworten auf das Radar (R1) oder den von den Squittern ADS-B gegebenen Positionen;
- einen zweiten Schritt, in dem das Radar (R1) Folgendes durchführt:
o Bestimmen (35), aus dieser Assoziation, der Antwortrate jedes Ziels durch Zählen der Anzahl der synchronen und asynchronen Antworten, die von dem Ziel für verschiedene gegebene Zeitperioden empfangen wurden;
o Bestimmen (36, 37), da die Umgebung in elementare Raumzellen (101, 102) unterteilt ist, der Antwortrate pro Zelle durch Zählen der Anzahl der synchronen und asynchronen Antworten, die von jedem in jeder Zelle georteten Ziel empfangen werden, wobei die Rate die Dichte von Mode-S-Abfragen und -Antworten pro Zelle oder pro Zellengruppe charakterisiert.

2. Verfahren nach Anspruch 1, **dadurch gekennzeichnet, dass** die Erkennung (32) von asynchronen Antworten durch das Radar (R1) durch eine permanente Erkennungs- und Decodierungsverarbeitung (21) der auf jedem Antennendiagramm (11, 12. 13, 14) empfangenen asynchronen Antworten erfolgt, wobei die Verarbeitung jedes der Diagramme separat auswertet.

3. Verfahren nach Anspruch 2, **dadurch gekennzeichnet, dass** die Diagramme das Summendiagramm (11), das Differenzdiagramm (12), das vordere Kontrolldiagramm (13) und das hintere Kontrolldiagramm (14) sind.

4. Verfahren nach einem der vorherigen Ansprüche, **dadurch gekennzeichnet, dass** die nicht von dem Radar (R1) angeforderten asynchronen Antworten wie folgt sind:
- Antworten, die von einem anderen Sekundärradar (R2, R3, R4) angefordert werden, die alle Abfragesystemtypen sein können, und/oder
- automatisch von den Zielen erzeugte Antworten, einschließlich Antworten vom Squitter-Typ ADS-B oder TCAS.

5. Verfahren nach einem der vorherigen Ansprüche, **dadurch gekennzeichnet, dass** in dem zweiten Schritt das Radar (R1) die Charakterisierung der Quellen (R2, R3, R4) von asynchronen Antworten durchführt, wobei die Quellen Sekundärradare sind, die alle Abfragesystemtypen sein können, wobei die Charakterisierung einer Quelle durch mindestens eine der folgenden Charakteristiken erfolgt:
- die Identifizierung der Quelle;
- die Rotationsperiode der Antenne der Quelle;
- die Ortung der Quelle;
- die "All Call"-Abfragerate der Quelle;
- die Breite der Abfragekeule der Quelle;
- die von der Quelle abgestrahlte Leistung.

6. Verfahren nach einem der vorherigen Ansprüche, **dadurch gekennzeichnet, dass** ein Warnsignal erzeugt wird, wenn die Rate von von einem Ziel empfangenen Antworten einen gegebenen Schwellenwert überschreitet.

7. Verfahren nach einem der vorherigen Ansprüche, **dadurch gekennzeichnet, dass** ein Warnsignal erzeugt wird, wenn die Antwortrate von mindestens einer Zelle (101, 102) einen gegebenen Schwellenwert überschreitet.

8. Verfahren nach einem der vorherigen Ansprüche, **dadurch gekennzeichnet, dass** die Blockierung eines Ziels die Unfähigkeit des Ziels ist, eine Antwort auf eine Mode-S-Abfrage zu senden, wobei im zweiten Schritt das Radar (R1) die Charakterisierung der Blockierrate eines Ziels durchführt, indem es die asynchronen Antworten des Ziels analysiert:
- entweder durch Charakterisieren der Nicht-Antwort des Transponders dieses Ziels:
o durch seine Beschäftigung mit der Erzeugung einer Antwort mit Hilfe einer synchronen Frucht der Abfrage, auf die der Transponder nicht geantwortet hat;
∘ oder durch eine Antwortrate jenseits der ICAO-Grenzwerte in der Zeit vor der Nicht-Antwort auf eine Abfrage;
- oder durch die Annahme einer anderen Hypothese, die Folgendem entspricht:
o einer Überlappung von Abfragen, die von mehreren Sensoren gesendet und vom Transponder dieses Ziels nicht interpretiert wurden;
o der Tatsache, dass ein Transponder dieses Ziels seine maximale Antwortrate erreicht hat, obwohl sie unter dem ICAO-Mindestwert liegt.

9. Verfahren nach einem der vorherigen Ansprüche, **dadurch gekennzeichnet, dass** der erste und der zweite Schritt in einem Multiradar-Kontext entweder durch mindestens zwei Sekundärradare ausgeführt werden, wobei die von jedem der mindestens zwei Radare erhaltenen Antwortraten unter Berücksichtigung aller synchronen und asynchronen Antworten der beiden Radare berechnet werden, um genauere globale Antwortraten zu erhalten, wobei die Abfragedichte anhand dieser globalen Raten charakterisiert wird.

10. Verfahren nach den Ansprüchen 8 und 9, **dadurch gekennzeichnet, dass** die von jedem der mindestens zwei Radare erhaltenen Blockierraten unter Berücksichtigung aller synchronen und asynchronen Antworten der beiden Radare berechnet werden, um eine genauere Gesamtblockierrate zu erhalten.

11. Verfahren nach Anspruch 9 oder 10, **dadurch gekennzeichnet, dass** die von jedem der mindestens zwei Radare erhaltenen Informationen zu einem Luftverkehrskontrollzentrum übertragen und von diesem Zentrum ausgewertet werden.

12. Verfahren nach Anspruch 11, **dadurch gekennzeichnet, dass** die Informationen ausgewertet werden, um eine Regulierung aller Sekundärradare zuzulassen, um die Zonen mit Überabfragen, Transponderblockaden und ausgefallenen Transpondern zu unterdrücken, um die Sicherheit der ATC-Überwachung zu erhöhen.

13. Sekundärradar, **dadurch gekennzeichnet, dass** es das Verfahren nach einem der Ansprüche 1 bis 12 implementieren kann.

## Claims

1. A method for characterising the density of Mode S interrogations and responses in the environment (41, 42, 43) of at least one operating secondary radar (R1), said environment being defined by the area of the airspace covered by said radar (R1), said environment being traversed by Mode S targets, with a Mode S target being a target emitting a response to the Mode S interrogations emitted by a secondary radar, **characterised in that** it comprises:
- a first step, in which said radar (R1):
o detects and locates Mode S targets by means of their synchronous responses to the interrogations emitted by said radar (R1) or their positions transmitted in extended ADS-B squitters;
o detects (32) the asynchronous responses emitted by the same Mode S targets, therefore not requested by said radar (R1);
o associates (33), for each located target, its asynchronous responses with the synchronous responses to said radar (R1) or the positions provided by said ADS-B squitters;
- a second step in which said radar (R1):
o determines (35), from said association, the rate of responses of each target by counting the number of synchronous and asynchronous responses received from said target for different given time periods;
o determines (36, 37), with said environment being divided into elementary space cells (101, 102), the rate of responses per cells by counting the number of synchronous and asynchronous responses received by each target located in each cell, said rate characterizing the density of Mode S interrogations and responses per cell or per group of cells.

2. The method according to claim 1, **characterised in that** the detection (32) of the asynchronous responses by said radar (R1) is carried out by continuous processing (21) of the detection and decoding of the asynchronous responses received on each antenna pattern (11, 12, 13, 14), with said processing separately using each of said patterns.

3. The method according to claim 2, **characterised in that** said patterns are the sum pattern (11), the difference pattern (12), the front control pattern (13) and the rear control pattern (14).

4. The method according to any one of the preceding claims, **characterised in that** said asynchronous responses not requested by said radar (R1) are:
- responses requested by another secondary radar (R2, R3, R4) that can be any type of interrogator; and/or
- responses automatically generated by said targets, including responses of the ADS-B or TCAS squitter type.

5. The method according to any one of the preceding claims, **characterised in that**, in said second step, said radar (R1) characterises the sources (R2, R3, R4) of asynchronous responses, with said sources being secondary radars, that can be any type of interrogator, with the characterization of a source being carried out by at least one characteristic from among the following characteristics:
- the identification of said source;
- the period of rotation of the antenna of said source;
- the location of said source;
- the rate of "All Call" interrogations of said source;
- the width of the interrogation lobe of said source;
- the power radiated by said source.

6. The method according to any one of the preceding claims, **characterised in that** a warning signal is generated when the rate of responses received from a target exceeds a given threshold.

7. The method according to any one of the preceding claims, **characterised in that** a warning signal is generated when the rate of response of at least one cell (101, 102) exceeds a given threshold.

8. The method according to any one of the preceding claims, **characterised in that**, with the blocking of a target being the inability of said target to emit a response to a Mode S interrogation, in said second step said radar (R1) characterises the rate of blocking of a target by analysing the asynchronous responses of said target:
- either by characterising the non-response of the transponder of this target:
o by its activity for generating a response using a synchronous fruit of the interrogation that has not had a response at the transponder;
∘ or by a rate of response beyond the ICAO limits in the period before not having a response to an interrogation;
- or assuming another hypothesis corresponding to:
o an overlap of interrogations emitted by a plurality of sensors not interpreted by the transponder of this target;
o a transponder of this target that has reached its maximum rate of response even though it is less than the minimum of the ICAO.

9. The method according to any one of the preceding claims, **characterised in that**, with said first step and said second step being executed in a multiradar context either by at least two secondary radars, said rate of responses obtained by each of said at least two radars are computed by considering all the synchronous and asynchronous responses of the two radars in order to obtain more accurate overall rates of responses, with the interrogation density being **characterised by** means of these overall rates.

10. The method according to claims 8 and 9, **characterised in that** said rates of blocking obtained by each of said at least two radars are computed by considering all the synchronous and asynchronous responses of the two radars in order to obtain a more accurate overall rate of blocking.

11. The method according to any one of claims 9 and 10, **characterised in that** the information obtained from each of said at least two radars is transmitted to an air control centre and used by said centre.

12. The method according to claim 11, **characterised in that** said information is used to regulate the set of secondary radars in order to eliminate the areas with excessive interrogations, of blocking the transponders, as well as the faulty transponders in order to increase the safety of ATC monitoring.

13. A secondary radar, **characterised in that** it is capable of implementing the method according to any one of claims 1 to 12.
